# EUROPEAN PATENT SPECIFICATION

(11) **EP 1 484 498 B1**
(45) Date of publication and mention of the grant of the patent: **06.01.2016**
(21) Application number: 03742893.5
(22) Date of filing: 28.02.2003
(51) Int. Cl.: F02M 61/18, F02M 61/14, F01L 13/00, F02B 17/00

(54) **IN-CYLINDER FUEL INJECTION-TYPE INTERNAL COMBUSTION ENGINE**
VERBRENNUNGSMOTOR MIT KRAFTSTOFFDIREKTEINSPRITZUNG
MOTEUR A COMBUSTION INTERNE A INJECTION DU CARBURANT DANS LE CYLINDRE

(30) Priority: 28.02.2002 JP 2002054358
(43) Date of publication of application: 08.12.2004
(73) Proprietor: Yamaha Hatsudoki Kabushiki Kaisha, Iwata-shi, Shizuoka 438-8501 (JP)
(72) Inventor: TANAKA, Daijiro, c/o YAMAHA HATSUDOKI K. K., Shizuoka 438-8501 (JP); SUZUKI, Yuichi, c/o YAMAHA HATSUDOKI K. K., Shizuoka 438-8501 (JP)
(74) Representative: Grünecker Patent- und Rechtsanwälte PartG mbB
(86) International application number: PCT/JP2003/002392
(87) International publication number: WO 2003/072934

(56) References cited:
- JP-A- 9 119 315
- JP-A- 9 119 315
- JP-A- 2000 345 944
- US-A- 5 709 190
- US-A- 6 045 063
- US-A1- 2001 018 904

## Description

This invention relates to a direct injection internal combustion engine in which fuel is directly injected into a cylinder bore from a fuel injection valve.

One internal combustion engine of the above type is disclosed in JP-A-2000-345944.

The internal combustion engine according to the patent document has a cylinder head having an intake passage in one side part thereof and an exhaust passage in the other side part thereof, a fuel injection valve which can inject fuel obliquely downward from an outer side of the one side part of the cylinder head into the cylinder bore, and a spark plug located approximately on the axis of the cylinder bore and having a discharging part positioned in the cylinder bore.

When the internal combustion engine is operated, fuel injected from the fuel injection valve during a compression stroke collides with the top surface of the piston and is directed toward the discharging part as shown in particular in FIGS. 7 and 8 in the patent document. In other words, a rich air fuel mixture layer is directed toward the discharging part to achieve ignition with reliability in the internal combustion engine. This is known as a stratified charge combustion method.

When stratified charge combustion is established, ignition can be reliably achieved as described above and greater fuel efficiency can be achieved even when the average air-fuel ratio of the air-fuel mixture in the cylinder bore is high, in other words, the air-fuel mixture is lean as a whole, such as during low load operation.

In the prior art described above, the fuel injected from the fuel injection valve is directed toward the axis (center) of the cylinder bore. Thus, the air-fuel ratio of the air-fuel mixture in the area close to the inside surface of the cylinder bore tends to be high, that is, lean. As a result, it takes time until a flame is propagated through the air-fuel mixture in the area close to the inside surface of the cylinder bore, which may cause knocking in this area. To avoid the knocking, the compression ratio cannot be high. This is not preferable since the fuel efficiency is decreased.

It is an object of this invention to provide an direct injection internal combustion engine which has a high compression ratio and operates with high fuel efficiency even when the average air-fuel ratio of the air-fuel mixture in the cylinder bore is high, in other words, the air-fuel mixture is lean as a whole, such as during low load operation.

According to the present invention said object is solved by a direct injection internal combustion engine having the features of independent claim 1.

Accordingly, it is provided a direct injection internal combustion engine comprising: a cylinder having a cylinder bore with an axis; a cylinder head having an intake passage in one side part thereof and an exhaust passage in the other side part thereof as viewed in a side view of the cylinder in which the axis of the cylinder bore is coincident with a vertical line; an intake valve which opens and closes the intake passage; an exhaust valve which opens and closes the exhaust passage; a fuel injection valve which can inject fuel obliquely downward from an outer side of the one side part of the cylinder head into the cylinder bore; and a spark plug located generally on the axis of the cylinder bore and having a discharging part positioned in the cylinder bore; wherein the fuel injected from the fuel injection valve forms a V-shape with the discharging part between them as viewed in a plan view of the cylinder and are spread out in the shape of a sector as viewed in the side view of the cylinder, and wherein the fuel injection valve is configured to inject the fuel during an intake stroke.

Moreover, the internal combustion engine may further comprise a variable valve timing device for changing the timing of opening and closing of at least one of an intake valve and an exhaust valve and a variable valve lift device for changing the lift of at least one of the intake valve and the exhaust valve. Or, the internal combustion engine may comprise at least one of the devices.

Further preferred embodiments are subject to the subclaims.

In the following the invention will be described in greater detail by means of preferred embodiments thereof with reference to the accompanying drawings, wherein:
FIG. 1 is a partial cross-sectional side view of an internal combustion engine;
FIG. 2 is a plan view of a piston; and
FIG. 3 is a front view of a fuel injection valve.

In the drawings, a reference numeral 1 denotes an internal combustion engine mounted on a vehicle such as a motorcycle or an automobile. The internal combustion engine 1 is a parallel multi-cylinder, four-stroke engine.

The internal combustion engine 1 has a crankcase supported by a stationary member such as a vehicle body and supporting a crankshaft (not shown), and cylinders 2 extending upward from the crankcase.

Each of the cylinders 2 has a cylinder body 5 having a cylinder bore 4 extending upward from the crankcase and having an axis 3 coincident with a vertical line, a cylinder head 6 removably fixed to an upper end of the cylinder body 5 to close the opening at the upper end of the cylinder bore 4, a cylinder head cover 7 fixed to an upper surface of the cylinder head 6, a piston 8 inserted in the cylinder bore 4 for sliding movement in the axial direction of the cylinder bore 4, and a connecting rod 9 for operatively connecting the piston 8 and the crankshaft. The space defined by the inside surface of the cylinder bore 4, a lower surface of the cylinder head 6, and a top surface 10 of the piston 8 when the piston 8 is in the top dead center position is a combustion chamber 11.

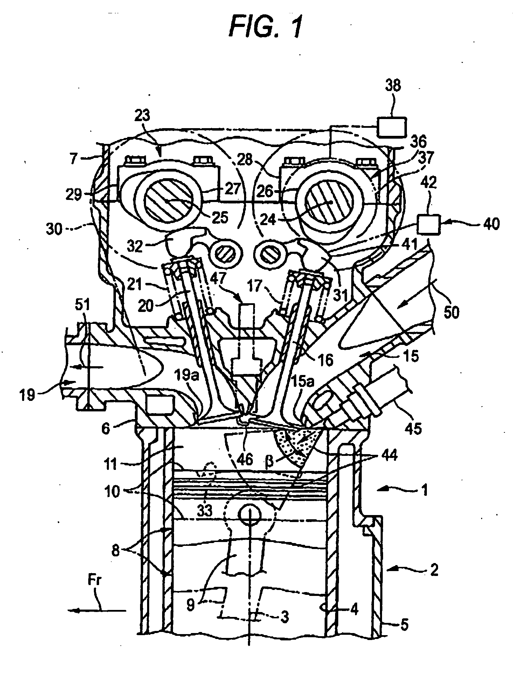

Here, in a side view of the cylinder 2 (FIG. 1), a horizontal direction perpendicular to the axis 3 indicated by the arrow Fr indicates the front of the internal combustion engine, and the references to right and left are from the perspective looking in the direction of the arrow Fr.

As shown in the side view of the cylinder 2 (FIG. 1), the cylinder head 6 has an intake passage 15 for communicating the outside of the cylinder head 6 to the combustion chamber 11 in one side (rear) part thereof. A pair of right and left intake valves 16 which can open and close right and left openings 15a to the combustion chamber 11 of the intake passage 15, respectively, are supported by the cylinder head 6. The openings 15a are led from the intake passage 15 and branched to right and left within the cylinder head 6. Each of the intake valves 16 has a spring 17 for elastically urging it in a direction to close the corresponding opening 15a from the side of the combustion chamber 11.

The cylinder head 6 has an exhaust passage 19 for communicating the combustion chamber 11 to the outside of the cylinder head 6 in the other side (front) part thereof. The exhaust passage 19 has a pair of right and left openings 19a to the combustion chamber 11, and a pair of right and left exhaust valves 20 which can open and close the right and left openings 19a, respectively, are supported by the cylinder head 6. Each of the exhaust valves 20 has a spring 21 for elastically urging it in a direction to close the corresponding opening 19a from the side of the combustion chamber 11.

The internal combustion engine 1 has a valve mechanism 23 operatively connected to the crankshaft for opening and closing the intake valves 16 and the exhaust valves 20 at predetermined crank angles.

The valve mechanism 23 has intake and exhaust camshafts 26 and 27 longitudinally disposed and having axes 24 and 25, respectively, extending in the lateral direction, bearings 28 and 29 for supporting the intake and exhaust camshafts 26 and 27 on the cylinder head 6 for rotation about the axes 24 and 25, respectively, chain type power transmission means 30 for operatively connecting the intake and exhaust camshafts 26 and 27 to the crankshaft, and locker arms 31 and 32 for engaging the intake and exhaust valves 16 and 20 with the intake and exhaust camshafts 26 and 27, respectively.

When the crankshaft is driven, the intake and exhaust camshafts 26 and 27 are rotated by the crankshaft via the power transmission means 30. Then, the intake and exhaust valves 16 and 20, which are in engagement with the intake and exhaust camshafts 26 and 27 via the locker arms 31 and 32, respectively, are opened and closed at predetermined crank angles.

To improve the compression ratio in the internal combustion engine 1, the capacity of the space between the lower surface of the cylinder head 6 and the top surface 10 of the piston 8 is small. That is, the lower surface of the cylinder head 6 and the top surface 10 of the piston 8 are close to each other when the piston 8 is in the top dead center position. The top surface 10 of the piston 8 has shallow recesses 33 which can receive the lower ends (valve elements) of the intake and exhaust valves 16 and 20 at positions corresponding thereto so that the lower ends of the intake and exhaust valves 16 and 20 cannot be brought into contact with the top surface 10 of the piston 8 reaching the top dead center position when the intake and exhaust valves 16 and 20 are opened and closed.

The valve mechanism 23 has a variable valve timing device 36 of a known type for changing the timing (crank angles) at which the intake valves 16 is opened and closed. The variable valve timing device 36 has a hydraulic variable mechanism 37 interposed between the intake camshaft 26 and the power transmission means 30, and control means 38 for electronically controlling the hydraulic variable mechanism 37. When the hydraulic variable mechanism 37 is operated by the control means 38, the timing of opening and closing of the intake valves 16, which are in engagement with the intake camshaft 26, is advanced or retarded.

The valve mechanism 23 has a variable valve lift device 40 of a known type for changing the lift of the intake valves 16. The variable valve lift device 40 has a variable mechanism 41 for changing the engagement state between the intake valves 16 and the intake camshaft 26, and control means 42 for electronically controlling the variable mechanism 41. When the variable mechanism 41 is operated by the control means 42, the lift of the intake valves 16, which are in engagement with the intake camshaft 26, is increased or decreased.

A fuel injection valve 45 is provided which can inject fuel jets 44 obliquely downward from an outer side of the one side (rear) part of the cylinder head 6 into the cylinder bore 4. The fuel injection valve 45 is supported by the cylinder head 6. A spark plug 47 is located approximately on the axis 3 of the cylinder bore 4 with a discharging part 46 positioned in the combustion chamber 11 in the cylinder bore 4. The spark plug 47 is also supported by the cylinder head 6. An engine control device (not shown) is provided for electronically controlling the control means 38 and 42, the fuel injection valve 45 and the spark plug 47.

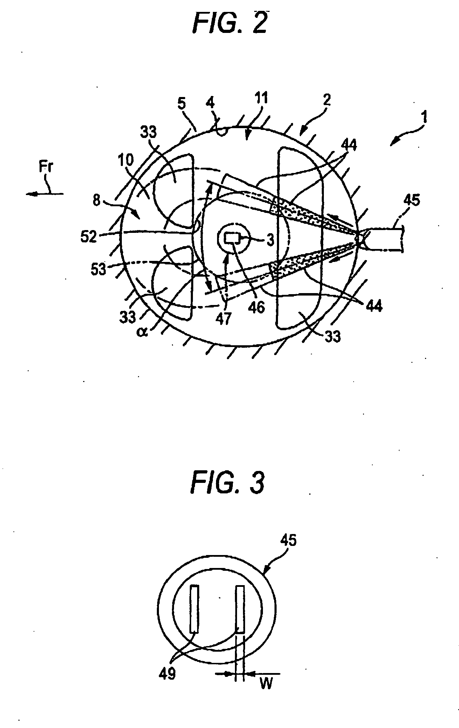

The fuel injection valve 45 has a pair of right and left injection nozzles 49 for injecting the fuel 44. Each injection nozzle 49 has an opening which has a vertically long rectangular shape. A pair of jets of the fuel 44 injected from the injection nozzles 49 form a V-shape with the discharging part 46 between them as seen in a plan view of the cylinder 2 (FIG. 2). In other words, the jets get farther apart from each other as they go downstream. The injection nozzles 49 preferably have a width W of 100 to 200 µm. The center lines of the fuel jets 44 make an angle α of about 35°. A preferable range of the angle α is 30 to 50°.

Since the width W of the injection nozzles 49 is as very small as 100 to 200 µm as described above, the fuel 44 injected from the injection nozzles 49 have a high injection speed. Thus, the fuel 44 is atomized first and can be easily ignited. Also, the ability of the fuel 44 to travel in one direction toward desired positions in the cylinder bore 4 is improved, so that the fuel 44 can reach desired positions more reliably.

The jets of the fuel 44 injected from the fuel injection valve 45 are spread out in the shape of a sector as seen in a side view of the cylinder 2 (FIG. 1). The injected fuel 44 are spread out at an angle β of about 75°. A preferable range of the angle β is 60 to 80°.

When the internal combustion engine 1 is operated, the intake and exhaust valves 16 and 20 are opened and closed by the crankshaft via the valve mechanism 23. Then, atmospheric air 50 is sucked into the cylinder bore 4 through the intake passage 15 and the fuel 44 is injected from the fuel injection valve 45 into the cylinder bore 4 to produce an air-fuel mixture during an intake stroke based on the opening and closing of the valves. The air-fuel mixture is compressed during the compression stroke following the intake stroke.

Then, the compressed air-fuel mixture is ignited by the discharging part 46 of the spark plug 47 and combusted in the combustion chamber 11. Combustion gas generated by the combustion is exhausted through the exhaust passage 19 as exhaust gas 51. The driving force of the internal combustion engine 1 generated by the combustion in the combustion chamber 11 is transmitted to the crankshaft and used to drive the vehicle.

When the internal combustion engine 1 is operated at a high speed, the timing (crank angles) at which the intake valves 16 are opened and closed is retarded by the variable valve timing device 36 to increase the output of the engine. Also, the lift of the intake valves 16 is increased by the variable valve lift device 40 to increase the amount of air 50 to be sucked into the cylinder bore 4. A variable valve timing device and a valve lift device for the exhaust valves 20 may be provided instead of or in addition to the variable valve timing device 36 and the variable valve lift device 40 for the intake valves 16.

The operation of the internal combustion engine 1 will be described in further detail. When the piston 8 is in the top dead center position or immediately after the piston 8 starts descending from the top dead center position during an intake stroke, the fuel injection valve 45 starts injecting the fuel 44 into the combustion chamber 11 in the cylinder bore 4 (as shown in solid lines in FIGS. 1 and 2). The fuel injection valve 45 continues to inject the fuel 44 until the piston 8 reaches a point between the top and bottom dead center positions.

As described before, the fuel injection valve 45 injects the fuel 44 into the cylinder bore 4 from the side of the intake passage 15 for introducing the air 50 into the cylinder bore 4 as shown in the side view of the cylinder 2 (FIG. 1). Since the fuel 44 injected from the injection valve 45 do not have to travel against the air 50 flowing into the cylinder bore 4 through the intake passage 15, the fuel 44 is not disturbed and travels in the direction in which they have been injected with its shape unchanged.

Also, the fuel 44 injected from the fuel injection valve 45 form a V-shape with the discharging part 46 between them, and the piston 8 moved downward from the top dead center position during an intake stroke of the internal combustion engine 1. Thus, the direction in which the piston 8 moves and the direction in which the fuel injection valve 45 injects the fuel jets 44 are both downward.

Thus, the fuel 44 injected from the fuel injection valve 45 pass the sides of the discharging part 46 and are prevented from colliding with the top surface 10 of the piston 8. As a result, the fuel 44 travels in the direction in which they have been injected smoothly (as shown by dot-dash lines in FIGS. 1 and 2).

When the tips of the jet of the fuel 44 reach the inside surface of the cylinder bore 4 and the top surface 10 of the piston 8, the fuel 44 is guided by the surfaces. Then, parts of the fuel 44 flow along the inside surface of the cylinder bore 4 and approach each other in the circumferential direction of the inside surface of the cylinder bore 4 (as shown by double-dot-dash lines in FIG. 2). The other parts of the fuel 44 flow along the inside surface of the cylinder bore 4 and are separated from each other in the circumferential direction of the inside surface of the cylinder bore 4.

Then, most of the fuel 44 injected into the cylinder bore 4 is gathered in the area close to the inside surface of the cylinder bore 4 during an intake stroke and a subsequent compression stroke such that the concentration of the fuel becomes generally uniform in the circumferential direction of the inside surface of the cylinder bore 4. In other words, a rich air-fuel mixture layer 52 with a doughnut shape around the axis 3 of the cylinder bore 4 and a lean air-fuel mixture layer 53 surrounded by the rich air-fuel mixture layer 52 and located in the vicinity of the discharging part 46 are formed in the cylinder bore 4 as seen in the plan view of the cylinder 2 (FIG. 2).

At the last stage of the compression stroke, the lean air-fuel mixture layer 53 is ignited by the discharging part 46 of the spark plug 47. Since the lean air-fuel mixture layer 53 is generated over a large crank angle span during an intake stroke and a compression stroke, in other words, since the lean air-fuel mixture layer 53 takes a long time to be generated, it is prevented that the air-fuel ratio of the lean air-fuel mixture layer 53 cannot be significantly higher than that of the rich air-fuel mixture layer 52.

Thus, the lean air-fuel mixture layer 53 has a relatively low air-fuel ratio and can be reliably ignited. When the lean air-fuel mixture layer 53 is ignited, the flame is immediately propagated through the rich air-fuel mixture layer 52 surrounding the lean air-fuel mixture layer 53 and having an air-fuel ratio lower than that of the lean air-fuel mixture layer 53.

Thus, it is possible to prevent occurrence of knocking in the rich air-fuel mixture layer 52, which corresponds to an end gas. Therefore, high fuel efficiency can be achieved with reliability even when the average air-fuel ratio of the air-fuel mixture in the cylinder bore 4 is high, in other words, the air-fuel mixture is lean as a whole, such as when the internal combustion engine 1 is operating at low load.

Also, the internal combustion engine 1 has the variable valve timing device 36 for changing the timing of opening and closing of at least either of the intake valves 16 and the exhaust valves 20 and the variable valve lift device 40 for changing the lift of at least either of the intake valves 16 and the exhaust valves 20. Or, the internal combustion engine 1 has at least one of the devices 36 and 40.

Thus, when the movements of the intake valves 16 and the exhaust valves 20 are controlled with the variable valve timing device 36 or the variable valve lift device 40 so that the lower ends of the intake and exhaust valves 16 and 20 cannot be brought into contact with the top surface 10 of the piston 8 when the intake and exhaust valves 16 and 20 are opened and closed while the internal combustion engine 1 is being operated, the depth of the recesses 33 formed in the top surface 10 of the piston 8 can be smaller and shape of the top surface 10 of the piston 8 can be simpler.

When the top surface 10 of the piston 8 has a simpler and flatter shape, the fuel jets 44 injected from the fuel injection valve 45 can be guided by the top surface 10 of the piston 8 more precisely and formed into the rich air-fuel mixture layer 52 with a desired doughnut shape. Thus, occurrence of knocking can be prevented more reliably. Accordingly, the compression ratio can be higher and the fuel efficiency can be further improved.

Additionally, when the depth of the recesses 33 can be smaller, the capacity of the recesses 33 can be smaller. This means that the capacity of the combustion chamber 11 at the time when the piston 8 is in the top dead center position can be smaller. Thus, the compression ratio can be further increased and the fuel efficiency can be improved more reliably.

The jets of the fuel 44 injected from the fuel injection valve 45 are spread out in the shape of a sector as seen in a side view of the cylinder 2 (FIG. 1) as described before.

Thus, the fuel 44 injected from the fuel injection valve 45 tends to follow every part of the inside surface of the cylinder bore 4 with a uniform air-fuel ratio as compared with when they are simply formed in a conical shape.

Thus, the rich air-fuel mixture layer 52 can be formed into a desired doughnut shape more reliably. Therefore, occurrence of knocking can be prevented more reliably and the fuel efficiency can be improved more reliably.

The above description is based on the illustrated example. The axis 3 of the cylinders 2 of the actual internal combustion engine 1 may be inclined with respect to a vertical line.

## Claims

1. A direct injection internal combustion engine comprising: a cylinder (2) having a cylinder bore (4) with an axis (3); a cylinder head (6) having an intake passage (15) in one side part thereof and an exhaust passage (19) in the other side part thereof as viewed in a side view of the cylinder (2) in which the axis (3) of the cylinder bore (4) is coincident with a vertical line; an intake valve (16) which opens and closes the intake passage (15); an exhaust valve (20) which opens and closes the exhaust passage (19); a fuel injection valve (45) configured to inject the fuel (44) during an intake stroke and which can inject fuel (44) obliquely downward from an outer side of the one side part of the cylinder head (6) into the cylinder bore (4); and a spark plug (47) located generally on the axis (3) of the cylinder bore and having a discharging part (46) positioned in the cylinder bore (4), **characterised in that**, the fuel (44) injected from the fuel injection valve (45) is spread out in the shape of a sector as viewed in the side view of the cylinder (2), wherein
the fuel injection valve (45) comprises a pair of right and left injection nozzles (49) each of which has a vertically long rectangular shape, wherein the fuel (44) injected from the fuel injection valve (45) forms a V-shape with the discharging part (46) between them as viewed in a plan view of the cylinder (2).

2. A direct injection internal combustion engine according to in claim 1, further comprising a variable valve timing device (36) for changing the timing of opening and closing of at least one of the intake valve (16) and the exhaust valve (20) and a variable valve lift device (40) for changing the lift of at least one of the intake valve (16) and the exhaust valve (20), or at least one of the variable valve timing device (36) and variable valve lift device (40).

3. A direct injection internal combustion engine according to claim 1, wherein in the cylinder head (6), an oblique angle of the intake passage (15) with respect to the axis (3) of the cylinder bore (4) is smaller than that of the exhaust passage (19) as viewed in the side view, and a bottom surface of the intake passage (15) at the side of the cylinder bore (4) is curved to be convex upward as viewed in the side view and smoothly extend toward an upstream side of the intake passage (15).

4. A direct injection internal combustion engine according to claim 1, wherein the fuel injection valve (45) is disposed below the intake passage (15) in the cylinder head (6), and wherein an oblique angle of the intake passage (15) with respect to the axis (3) of the cylinder bore (4) is smaller than that of the fuel injection valve (45) as viewed in the side view.

5. A direct injection internal combustion engine according to claim 1, wherein in the vicinity of the one side part of the cylinder head (6), the intake passage (15) is defined only by an inner surface of the cylinder head (6) and an inner surface of an intake pipe connected to the cylinder head (6).

6. A direct injection internal combustion engine according to any one of claims 1 to 5, wherein each of the pair of right and left injection nozzles (49) of the fuel injection valve (45) has a width (W) of 100 µm to 200 µm.

7. A direct injection internal combustion engine according to any one of claims 1 to 5, wherein center lines of the fuel (44) injected in the form of V-shape make an angle (α) of 30° to 50°.

8. A direct injection internal combustion engine according to any one of claims 1 to 5, wherein the injected fuel (44) forms a generally symmetrical V-shape with the discharging part (46) between them as viewed in the plan view.

9. A direct injection internal combustion engine according to any one of claims 1 to 5, wherein the injected fuel (44) are spread out at an angle (β) of 60° to 80° as viewed in the side view.

## Patentansprüche

1. Eine Direkt-Einspritz-Brenn-Kraft-Maschine mit innerer Verbrennung die umfasst: einen Zylinder (2), der eine Zylinder-Bohrung (4) mit einer Achse (3) hat; einen Zylinder-Kopf (6), der einen Einlass-Durchgang (15) in einem Seiten-Teil desselben und einen Auslass-Durchgang (19) in dem anderen Seiten-Teil desselben hat, wenn in einer Seiten-Ansicht des Zylinders (2 )betrachtet, in der die Achse (3) der Zylinder-Bohrung (4) mit einer vertikalen Linie übereinstimmt; ein Einlass-Ventil (16), welches den Einlass-Durchgang (15) öffnet und schließt; ein Auslass-Ventil (20), welches den Auslass-Durchgang (19) öffnet und schließt; ein Kraftstoff-Einspritz-Ventil (45) konfiguriert, um Kraftstoff (44) während eines Einlass-Taktes einzuspritzen und welches Kraftstoff (44) schräg nach unten von einer Außenseite von dem einen Seiten-Teil des Zylinder-Kopfes (6) in die Zylinder-Bohrung (4) einspritzen kann; und eine Zündkerze (47), angeordnet im Wesentlichen auf der Achse (3) der Zylinder-Bohrung und die einen Abgabeteil (46) hat, der in der Zylinder-Bohrung (4) positioniert ist, **dadurch gekennzeichnet, dass** der Kraftstoff (44), eingespritzt von dem Kraftstoff-Einspritz-Ventil (45) in der Form eines Sektors ausgesprüht ist, betrachtet in der Seiten-Ansicht des Zylinders (2), wobei
das Kraftstoff-Einspritz-Ventil (45) ein paar von rechten und linken Einspritz-Düsen (49) umfasst, von denen jede eine vertikal lange rechtwinklige Form hat, wobei der Kraftstoff (44), eingespritzt durch das Kraftstoff-Einspritz-Ventil (45), eine V-Form bildet mit dem Abgabeteil (46) zwischen diesem, wenn betrachtet in einer Draufsicht des Zylinders (2).

2. Eine Direkt-Einspritz-Brenn-Kraft-Maschine mit innerer Verbrennung gemäß Anspruch 1, die weiterhin umfasst eine Variabl-Ventil-Steuervorrichtung (36) zum Ändern der Zeiten des Öffnens uns Schließens von zumindest einen von dem Einlass-Ventil (16) und dem Auslass-Ventil (20) und eine Variabl-Ventil-Hubvorrichtung (40) zum Ändern des Hubes von zumindest einem dem Einlass-Ventil (16) und dem Auslass-Ventil (20), oder zumindest eines von der Variabl-Ventil-Steuervorrichtung (36) und der Variabl-Ventil-Hubvorrichtung (40).

3. Eine Direkt-Einspritz-Brenn-Kraft-Maschine mit innerer Verbrennung gemäß Anspruch 1, wobei in dem Zylinder-Kopf (6) ein Neigungswinkel des Einlass-Durchgangs (15) mit Bezug auf die Achse (3) der Zylinder-Bohrung (4) kleiner als der des Auslass-Durchgangs (19), wenn in der Seiten-Ansicht betrachtet, und eine Bodenfläche des Einlass-Durchgangs (15) an der Seite der Zylinder-Bohrung (4) gekrümmt ist, um konvex nach oben zu sein, wenn betrachtet in der Seiten-Ansicht und sich weich zu einer Strom-Auf-Seite des Einlass-Durchgangs (15) erstreckt.

4. Eine Direkt-Einspritz-Brenn-Kraft-Maschine mit innerer Verbrennung gemäß Anspruch 1, wobei das Kraftstoff-Einspritz-Ventil (45) unterhalb des Einlass-Durchgangs (15) in dem Zylinder-Kopf (6) positioniert ist, und wobei ein Neigungswinkel des Einlass-Durchgangs (15) mit Bezug auf die Achse (3) der Zylinder-Bohrung (4) kleiner ist als der des Kraftstoff-Einspritz-Ventils (45), wenn in der Seiten-Ansicht betrachtet.

5. Eine Direkt-Einspritz-Brenn-Kraft-Maschine mit innerer Verbrennung gemäß Anspruch 1, wobei in der Umgebung des einen Seiten-Teils des Zylinder-Kopfes (6) der Einlass-Durchgang (15) nur durch eine Innenfläche des Zylinder-Kopfes (6) und eine Innenfläche einer Einlass-Leitung, verbunden mit dem Zylinder-Kopf (6), definiert ist.

6. Eine Direkt-Einspritz-Brenn-Kraft-Maschine mit innerer Verbrennung gemäß irgendeinem der Ansprüche 1 bis 5, wobei jedes von dem Paar von rechten und linken Einspritz-Düsen (49) des Kraftstoff-Einspritz-Ventils (45) eine Breite (W) von 100 µm bis 200 µm hat.

7. Eine Direkt-Einspritz-Brenn-Kraft-Maschine mit innerer Verbrennung gemäß irgendeinem der Ansprüche 1 bis 5, wobei Mittellinien des Kraftstoffes (44), eingespritzt in V-förmiger Form, einen Winkel (α) von 30° bis 50° bilden.

8. Eine Direkt-Einspritz-Brenn-Kraft-Maschine mit innerer Verbrennung gemäß irgendeinem der Ansprüche 1 bis 5, wobei der eingespritzte Kraftstoff (44) eine im Wesentlichen symmetrische V-Form ausbildet, mit dem Abgabeteil (46) zwischen diesem, wenn in der Draufsicht betrachtet.

9. Eine Direkt-Einspritz-Brenn-Kraft-Maschine mit innerer Verbrennung gemäß irgendeinem der Ansprüche 1 bis 5, wobei der eingespritzte Kraftstoff (44) mit einem Winkel (β) von 60° bis 80° ausgesprüht wird, wenn in der Seiten-Ansicht betrachtet.

## Revendications

1. Moteur à combustion interne à injection directe comprenant :
un cylindre (2) comportant un alésage de cylindre (4) avec un axe (3) ; une tête de cylindre (6) comportant un passage d'admission (15) dans une partie latérale de celle-ci et un passage d'échappement (19) dans l'autre partie latérale de celle-ci comme vu dans une vue de côté du cylindre (2) dans lequel l'axe (3) de l'alésage de cylindre (4) coïncide avec une ligne verticale ; une soupape d'admission (16) qui ouvre et ferme le passage d'admission (15) ; une soupape d'échappement (20) qui ouvre et ferme le passage d'échappement (19) ; une soupape d'injection de carburant (45) configurée pour injecter le carburant (44) pendant une course d'admission et qui peut injecter du carburant (44) obliquement vers le bas depuis un côté extérieur de l'une partie latérale de la tête de cylindre (6) dans l'alésage de cylindre (4) ; et une bougie d'allumage (47) située globalement sur l'axe (3) de l'alésage de cylindre et comportant une partie de décharge (46) positionnée dans l'alésage de cylindre (4) ; **caractérisé en ce que** le carburant (44) injecté depuis la soupape d'injection de carburant (45) est étalé sous la forme d'un secteur comme vu en vue de côté du cylindre (2), dans lequel
la soupape d'injection de carburant (45) comprend une paire de buses d'injection gauche et droite (49) chacune ayant une forme rectangulaire longue verticalement, dans lequel le carburant (44) injecté depuis la soupape d'injection de carburant (45) forme un V avec la partie de décharge (46) au milieu comme vu en vue plane du cylindre (2).

2. Moteur à combustion interne à injection directe selon la revendication 1, comprenant en outre un dispositif de calage de soupapes variable (36) pour changer le calage de l'ouverture et de la fermeture d'au moins une de la soupape d'admission (16) et la soupape d'échappement (20) et un dispositif de levage de soupapes variable (40) pour changer la levée d'au moins une de la soupape d'admission (16) et la soupape d'échappement (20), ou au moins l'un du dispositif de calage de soupapes variable (36) et du dispositif de levage de soupapes variable (40).

3. Moteur à combustion interne à injection directe selon la revendication 1, dans lequel dans la tête de cylindre (6), un angle oblique du passage d'admission (15) par rapport à l'axe (3) de l'alésage de cylindre (4) est plus petit que celui du passage d'échappement (19) comme vu sur la vue de côté, et une surface inférieure du passage d'admission (15) du côté de l'alésage de cylindre (4) est courbée pour être convexe vers le haut comme vu sur la vue de côté et s'étendre doucement vers un côté amont du passage d'admission (15).

4. Moteur à combustion interne à injection directe selon la revendication 1, dans lequel la soupape d'injection de carburant (45) est disposée sous le passage d'admission (15) dans la tête de cylindre (6), et dans lequel un angle oblique du passage d'admission (15) par rapport à l'axe (3) de l'alésage de cylindre (4) est plus petit que celui de la soupape d'injection de carburant (45) comme vu sur la vue de côté.

5. Moteur à combustion interne à injection directe selon la revendication 1, dans lequel au voisinage de l'une partie latérale de la tête de cylindre (6), le passage d'admission (15) est défini seulement par une surface intérieure de la tête de cylindre (6) et une surface intérieure d'un tuyau d'admission connecté à la tête de cylindre (6).

6. Moteur à combustion interne à injection directe selon l'une quelconque des revendications 1 à 5, dans lequel chacune de la paire de buses d'injection gauche et droite (49) de la soupape d'injection de carburant (45) a une largeur (W) de 100 µm à 200 µm.

7. Moteur à combustion interne à injection directe selon l'une quelconque des revendications 1 à 5, dans lequel les lignes centrales du carburant (44) injecté sous la forme d'un V font un angle (α) de 30° à 50°.

8. Moteur à combustion interne à injection directe selon l'une quelconque des revendications 1 à 5, dans lequel le carburant (44) injecté a une forme globalement symétrique de V avec la partie de décharge (46) au milieu comme vu sur la vue plane.

9. Moteur à combustion interne à injection directe selon l'une quelconque des revendications 1 à 5, dans lequel le carburant (44) injecté est étalé à un angle (β) de 60° à 80° comme vue sur la vue de côté.
